# EUROPEAN PATENT APPLICATION

(11) **EP 2 362 292 A1**
(43) Date of publication of application: **31.08.2011**
(21) Application number: 10154862.6
(22) Date of filing: 26.02.2010
(51) Int. Cl.: G06F 1/16, G06F 3/048, H04M 1/02, G06F 3/033

(54) **Dual-screen mobile device**

(71) Applicant: RESEARCH IN MOTION LIMITED, Waterloo, Ontario N2L 3W8 (CA)
(72) Inventor: Griffin, Jason Tyler, Waterloo Ontario N2L 3W8 (CA)
(74) Representative: Patel, Binesh

(57) **Abstract**

A dual-screen mobile device has a first display screen and a second display screen. Only the second display screen is touch-sensitive. The first display screen may be used for displaying content while the second (touch-sensitive) display screen may be used for displaying functional controls (such as back and forward arrows, scroll bar, zoom control, etc.). Displaying the functional control on the second display screen instead of on the same screen as the application content improves the overall ergonomics of the mobile device. The application content appears less constrained and cluttered when the functional controls are displayed on a separate screen.

## Description

### TECHNICAL FIELD

The present technology relates generally to mobile devices and, more particularly, to mobile devices having a touch-screen.

### BACKGROUND

Touch-screen devices are becoming increasingly popular on various types of mobile devices, including, for example, wireless communications devices, smartphones, personal digital assistants (PDAs), palmtops, computing tablets, GPS navigation units, MP3 players, handheld gaming consoles, and other handheld electronic devices.

A variety of touch-screen technologies are now known in the art, for example resistive, surface acoustic wave, capacitive, infrared, strain gauge, optical imaging, dispersive signal technology, acoustic pulse recognition, frustrated total internal reflection, and diffused laser imaging.

A touch-screen device can be any computing device that has a touch-sensitive display that detects the location of touches (from a finger or stylus) on the display screen and converts these touches into user input for controlling software applications running on the device or for controlling other functionalities of the device. The touch-screen thus displays both the application content and the functional controls for interacting with the application content. Functional controls that may be displayed on the touch-screen include a virtual keyboard or keypad, scrollbars, buttons, icons, menus, etc. A variety of technologies have been developed to optimize the display of functional controls on the same screen as the content. Because of the limited onscreen space for displaying both content and functional controls, one technique is to cause functional controls to appear and disappear as required. Another solution is to employ a dual-screen device such as, for example, the Nintendo DS in which a virtual keyboard is displayed on one of the two touch-sensitive screens.

### BRIEF DESCRIPTION OF THE DRAWINGS

Further features and advantages of the present technology will become apparent from the following detailed description, taken in combination with the appended drawings, in which:

FIG. 1 is a high-level depiction of a dual-screen mobile device in accordance with one implementation of the present technology;

FIG. 2 is a depiction of one example of a dual-screen mobile device in accordance with one specific implementation of the present technology;

FIG. 3 is a depiction of a variant of the dual-screen mobile device presented in FIG. 2;

FIG. 4 is a depiction of another variant of the dual-screen mobile device presented in FIG. 2;

FIG. 5 depicts how the dual-screen mobile device dynamically adapts the functional controls to the current state of the application;

FIG. 6 depicts how the dual-screen mobile device dynamically adds new tools or new user interface elements (or remove tools or user interface elements) as the onscreen content changes;

FIG. 7 depicts how the functional controls may be adapted to each specific application on the dual-screen mobile device (e.g. photo-specific tools may be displayed for a picture-viewer application);

FIG. 8 depicts another example of how the functional controls may be adapted to a specific application (in this further example, navigational controls are generated for interacting with a map/navigation application);

FIG. 9 is a flowchart depicting main steps of a method of interacting with a dual-screen mobile device in accordance with certain implementations of the present technology;

FIG. 10 is a depiction of yet another example of a dual-screen mobile device in which the device includes an accelerometer to determine the orientation of the device and to cause the first and second display screens to re-orient the content and functional controls; and

FIG. 11 is a depiction of an example of a multi-screen device having two distinct touch-sensitive display screens and a central (non-touch-sensitive) display screen.

It will be noted that throughout the appended drawings, like features are identified by like reference numerals.

### DETAILED DESCRIPTION

In general, the present technology provides a novel dual-screen mobile device. This device has a first display screen for displaying application content and a second display screen for displaying functional controls such as scroll bars, zoom controls, application-specific icons, etc. Only the second display screen is touch-sensitive. The functional controls may be adapted to the specific application and to the specific state of the application.

Thus, one aspect of the present technology is a touch-screen mobile device having a processor coupled to memory for executing an application, a first display screen for displaying application content generated by the application, and a second display screen for displaying functional controls for interacting with the application content. Only the second display screen is a touch-sensitive display screen.

Another aspect of the present technology is a method of interacting with an application on a mobile device. The method entails displaying on a first display screen application content generated by the application and displaying on a second display screen functional controls for interacting with the application content. Only the second display screen is a touch-sensitive display screen.

Yet another aspect of the present technology is a computer-readable medium comprising instructions in code which when loaded into memory and executed on a processor of a mobile device is adapted to display application content on a first display screen and display on a second display screen functional controls for interacting with the application content, wherein only the second display screen is a touch-sensitive display screen.

The details and particulars of these aspects of the technology will now be described below, by way of example, with reference to the attached drawings.

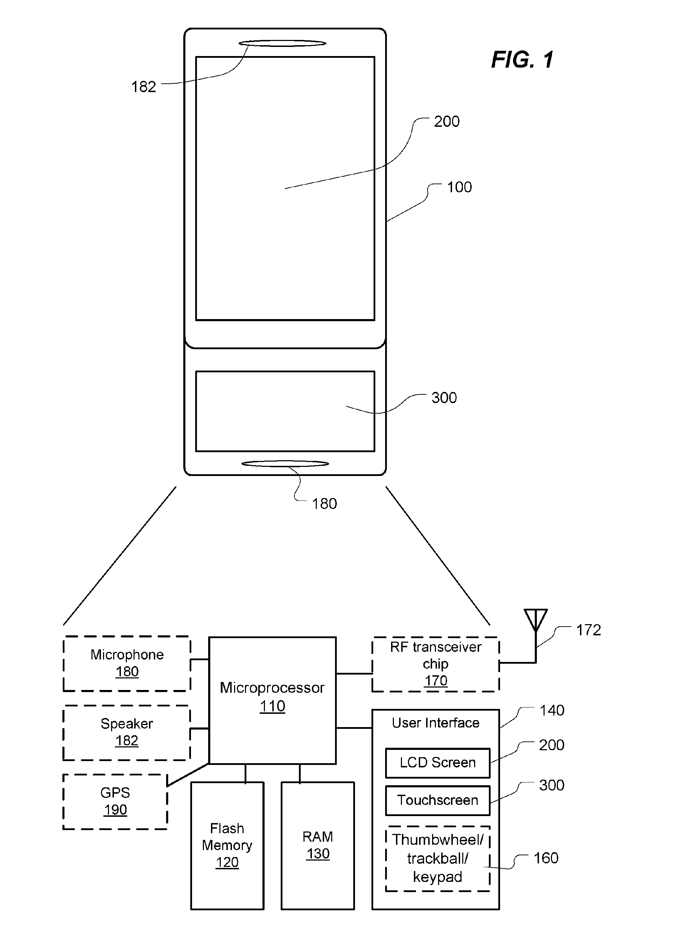

FIG. 1 is a high-level depiction of a generic dual-screen mobile device in accordance with the broad inventive concepts presented herein. As shown by way of example in FIG. 1, the novel dual-screen mobile device, which is designated generally by reference numeral 100, includes a processor (or microprocessor) 110 for executing an application, memory in the form of flash memory 120 and/or RAM 130 for storing the application and related data, and a user interface 140 with which the user interacts with the application. The user interface 140 includes at least one touch-sensitive display screen and one non-touch-sensitive display screen. As shown in FIG. 1, this user interface 140 includes a first display screen (e.g. a non-touch-sensitive LCD screen 200) and a second display screen 300 which is touch-sensitive. The device may optionally include a further keypad/trackball/thumbwheel 160.

Optionally, where the dual-screen mobile device is a wireless communications device, the device 100 would further include a radiofrequency transceiver chip 170 and antenna 172. Optionally, where the device is a voice-enabled wireless communications device, such as, for example, a smartphone or cell phone, the device would further include a microphone 180 and a speaker 182. This device may optionally include a GPS receiver chipset 190. It bears emphasizing, however, that the present technology can be implemented on any touch-screen device, even if the device is not wireless enabled and/or GPS-enabled.

For greater certainty, therefore, and for the purposes of this specification, the expression "dual-screen mobile device" is meant to encompass a broad range of portable, handheld or mobile electronic devices such as smart phones, cell phones, satellite phones, PDA's or Pocket PCs, computing tablets, laptops, MP3 players, GPS navigation units, that include at least two distinct screens, one of which is a touch-sensitive display screen.

Still referring to FIG. 1, the novel dual-screen mobile device thus includes a first display screen 200 for displaying application content generated by the application and a second display screen 300 for displaying functional controls for interacting with the application content. Only the second display screen 300 is a touch-sensitive display screen. The first display screen 200 is a regular (non-touch-sensitive display screen). For the purposes of this specification, "application content" means any viewable output that is displayed onscreen by the device, including text, images, video, etc. For the purposes of this specification, "functional controls" mean user interface elements such as, but not limited to, scroll bars, panning bars, zoom sliders, icons, buttons (such as back and forward buttons), menus, toggles, etc. Functional controls may also include touch-sensitive cursor-control functionality that enables a user to direct the cursor (or equivalent) by touching and dragging one's finger (or a stylus) over the touchscreen.

This novel technology provides a number of benefits and advantages relative to the prior art. Firstly, by displaying the functional controls on a separate and distinct (touch-sensitive) display screen, the onscreen area of the first (primary) screen can devoted exclusively to presenting content. None of the onscreen area of the first screen is lost to functional controls such as scroll bars and panning bars. This is particularly significant for mobile devices where the onscreen "real estate" is quite limited.

In addition to the actual effective diminution in onscreen area for displaying content, there is believed to be a significant psychological crowding effect when functional controls such as slide bars are placed around the periphery of the content on a single screen. The user feels that the content is constrained. This psychological constraint (crowding effect) is addressed by this novel technology since the functional controls are removed from the primary screen altogether.

Moreover, the use of two screens, i.e. a first (non-touch-sensitive) display screen and a second (touch-sensitive( display screen means that the overall cost of the device can be minimized. Touchscreens are more expensive and more fragile than their non-touch-sensitive counterparts (i.e. regular LCD screens). Thus, not only can the overall cost of the device be reduced but its robustness improved. Furthermore, in the specific implementations shown, the touch-sensitive screen can be slid from an exposed position into a protected position to minimize the likelihood that the display screen is scratched or otherwise damaged. This also reduces the likelihood of inadvertent input when the device is placed in a holder, pocket, purse, etc. Alternatively, the device may be constructed as a flip phone with a pivoting or folding mechanism to protect the touch-sensitive screen. However, it should be noted that it is not necessary that the device incorporate any sort of sliding or folding mechanism.

In conventional single-screen touch devices, the same screen acts as both the touch-input screen and the viewing screen. Accordingly, the screen tends to become smudged over time, diminishing the clarity and sharpness of the text and images presented onscreen. To counter this decrease in onscreen visibility requires frequent cleaning of the screen. This novel technology addresses this longstanding problem by providing one touch-screen for controls and one non-touch-screen for viewing content. The user of the device thus only touches the touch-screen. Since the user of the device has no reason to touch the non-touch-screen, this screen remains free of finger smudges. Consequently, the content that is displayed on this non-touch-screen is never blurred by finger smudges (or at least the smudging of the screen is greatly reduced as the only contact with that screen is incidental).

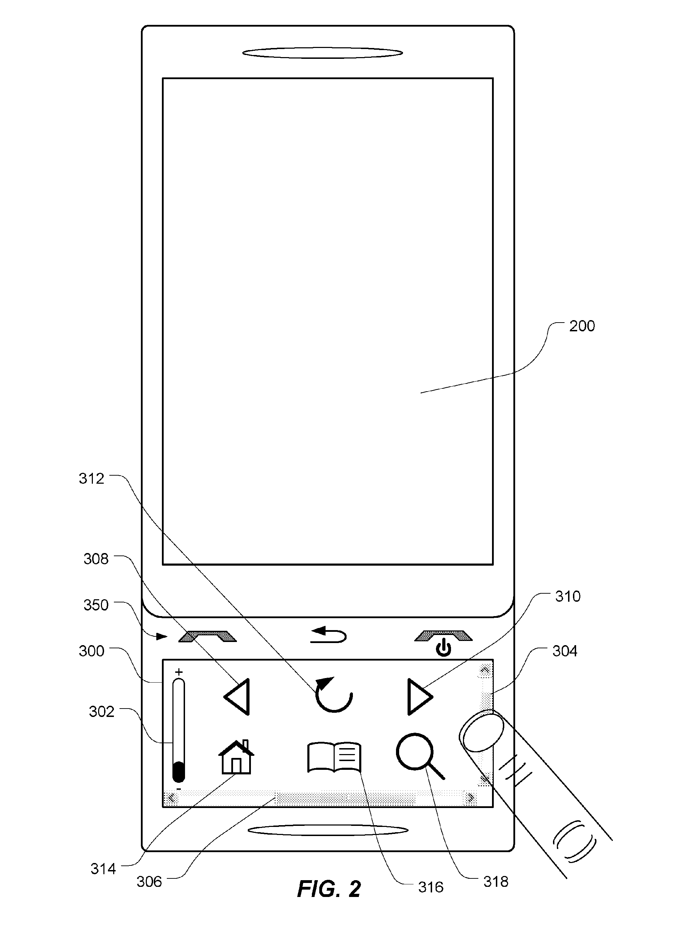

FIG. 2 is a depiction of one example of a dual-screen mobile device in accordance with one specific implementation of the present technology. In this example, the second display screen 300 displays various functional controls for a web browser (the content of which would be displayed on the first screen 200). In this example, the second display screen 300 presents a zoom slider 302, a vertical scroll bar 304 and a horizontal panning bar 306 (which may be classic slide bars as shown in this example). Additionally, there may be other functional controls presented such as backward and forward arrows 308, 310 for navigating/moving through cached web pages, a refresh button 312 to reload content, a home page button 314 for sending the browser to a predetermined website such as, for example, a favourite search engine, a bookmark button 316 for saving web addresses of interest, and a search/find button 318 for performing search or find operations. The functional controls presented in FIG. 2 are merely a few specific examples meant to illustrate how a set of functional controls may be displayed on a dedicated function screen or control screen. As will be appreciated, many other types of buttons or icons (or configurations of buttons and icons) are possible without departing from the inventive concept(s). Optionally, the device may include fixed buttons or controls 350 such as the phone function buttons depicted by way of example in this figure. These fixed buttons may be traditional electro-mechanical keys or they may comprise a graphical overlay with a fixed image or icon disposed over a touch-sensitive layer that is extended upward from the same touch-sensitive layer of the touch-sensitive display screen 300.

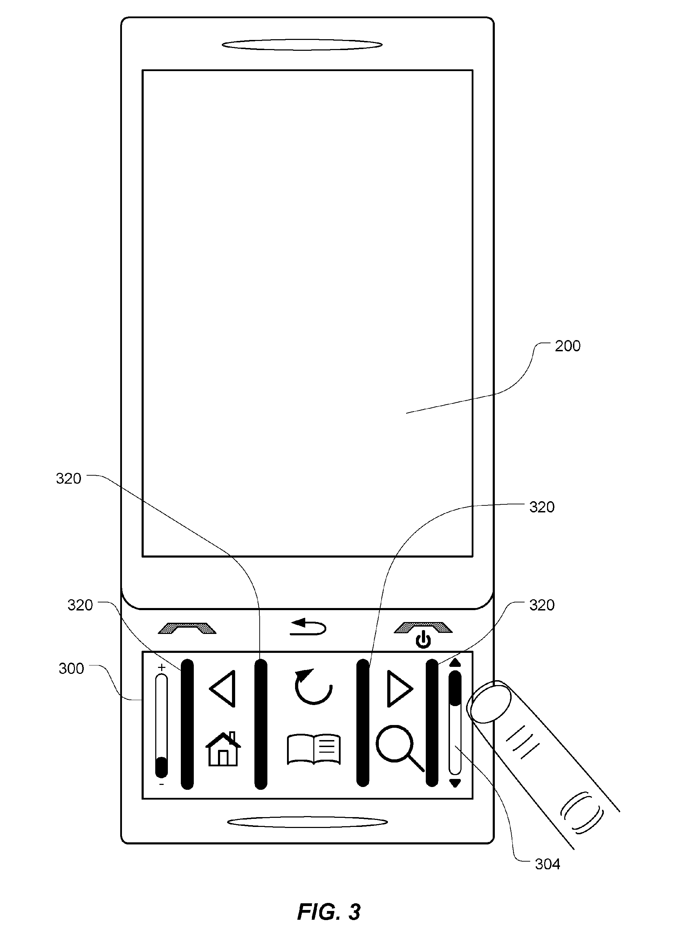

FIG. 3 is a depiction of a variant of the dual-screen mobile device presented in FIG. 2. In this particular variant, the second display screen 300 presents a zoom slider, a scroll bar, back and forward arrows, home page button, bookmarks button, refresh button and search button. Optional onscreen dividers 320 are displayed to visually separate one or more functional controls from adjacent functional controls. The device may optionally having a setting to suppress these dividers 320 and/or suppress specific functional controls where the user wishes to view a less cluttered screen.

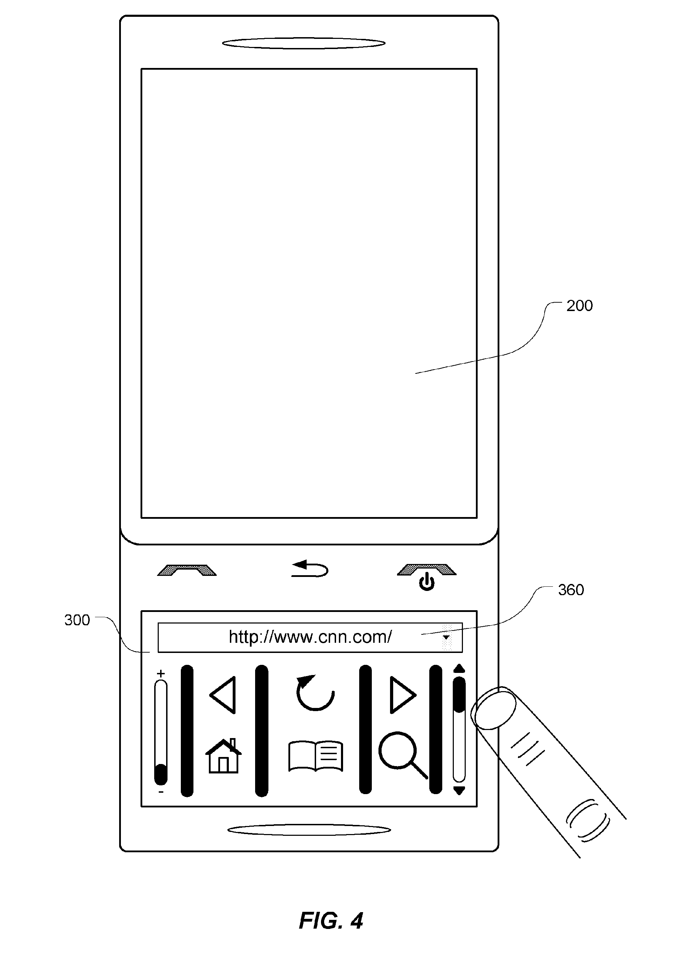

FIG. 4 is a depiction of another variant of the dual-screen mobile device presented in FIG. 2. The second display screen presents, in addition to the various functional controls and dividers shown in FIG. 3, a uniform resource locator (URL) address box 360, i.e. a box or field for displaying an http address for a website address. In this example, the address http://www.cnn.com is shown solely by way of example. The address may be typed into the URL address box in a variety of ways. For example, the user may tap on the box or perform another gesture to cause the device to trigger the displaying of a virtual keyboard or keypad. The user could then type by touching the key images on the virtual keyboard displayed on the touch-screen 300.

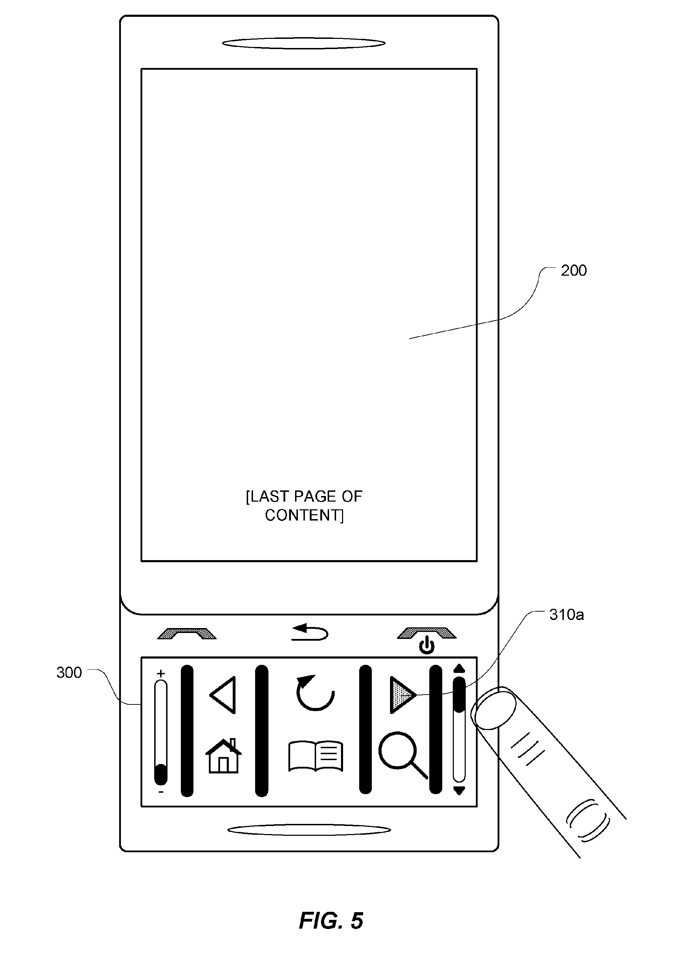

FIG. 5 depicts how the dual-screen mobile device dynamically adapts the functional controls to the current state of the application. In this example, the user has browsed to the fifth and final web page. In this example, it is assumed that no more content is available. The functional controls on the second display screen are thus dynamically modified to reflect the fact that the user cannot advance any further, i.e. the user has reached the last page of content. The now-inoperative forward arrow button 310a is thus greyed out. Alternatively, this now-inoperative forward arrow button 310a may be removed altogether.

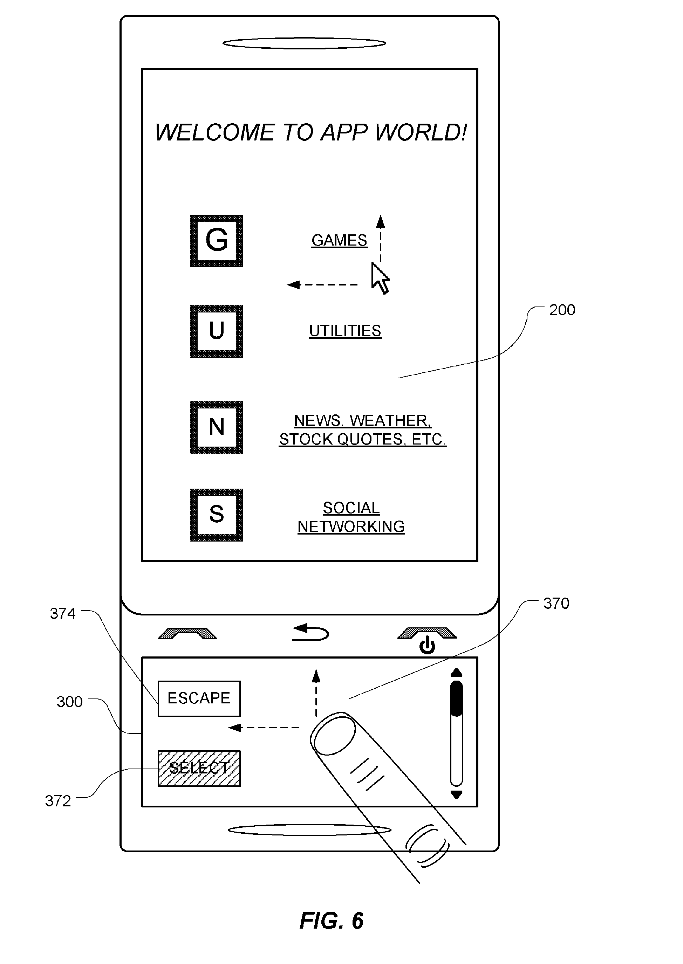

FIG. 6 depicts how the dual-screen mobile device dynamically adds new tools or new user interface elements (or remove tools or user interface elements) as the onscreen content changes. In this example, it is assumed that the user has used the web browser to browse to an online mobile applications store ("App World"). The webpage content is displayed on the first screen 200 by way of example only. The device may dynamically adapt the functional controls to the content of this particular webpage. For example, the webpage may be tailored to presentation on a mobile device and thus there is no resizable content. In such a case, the panning bar and zooming bar may no longer be relevant. These functional controls can be removed dynamically and replaced with context-appropriate controls. For example, for an e-commerce site like this fictitious App World, icons to buy, proceed to checkout, determine compatibility, etc. may be relevant. In this example, the vertical scroll bar is retained. New buttons (escape 374 and select 372) are displayed and the touch screen becomes a touch-sensitive control pad 370 for directing the cursor. In the specific case shown, the cursor is not on any hyperlink or onscreen element. Thus, the select button 372 is deactivated (greyed out). When the cursor is moved onto an actual onscreen selection, the onscreen content on the first screen may change (e.g. a hyperlink may change appearance) and, concurrently, the functional control button "Select" 372 may be dynamically reactivated. This example illustrates how the functional controls can adapt dynamically in response to user input and/or to changes in onscreen content.

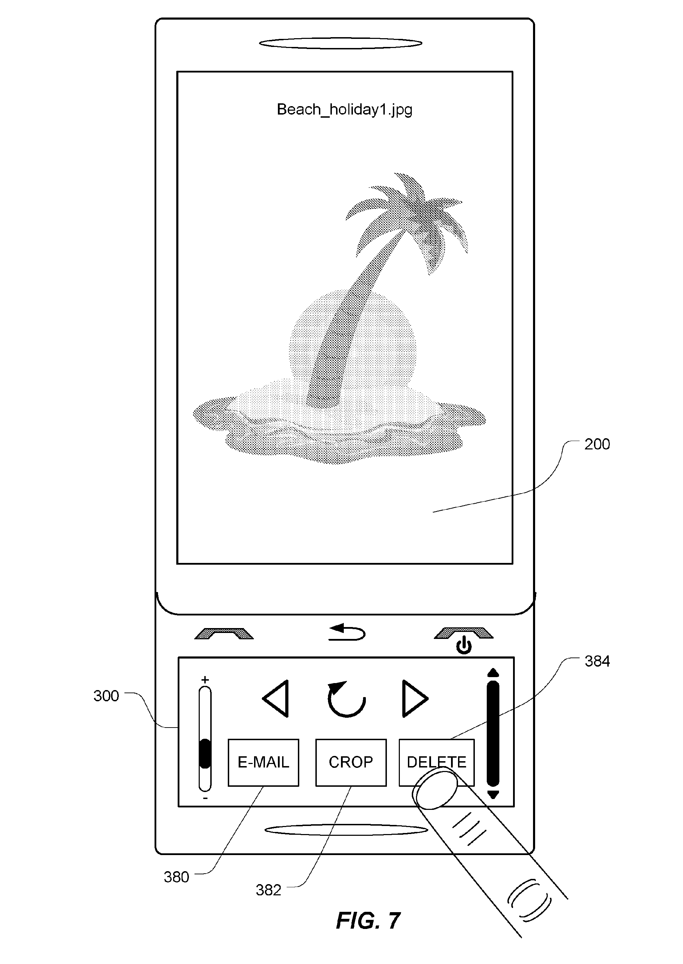

FIG. 7 depicts how the functional controls may be adapted to each specific application on the dual-screen mobile device. In this further example, the device displays on the second screen various photo-specific tools and buttons that act as functional controls for a picture-viewer application. In this example, buttons for e-mailing a picture ("E-mail" 380, cropping a picture ("Crop" 382) or deleting a picture ("Delete" 384) are presented. Where a plurality of picture files are in memory, back and forward arrows may be provided, as depicted, to navigate through the plurality of photos. A zoom slider may optionally be provided to enable the user to zoom in or out of the picture. Optionally, a refresh button may be provided to enable the user to revert to the default presentation of the photograph, e.g. after having zoomed, edited, cropped or otherwise manipulated it. The functional control on the right side in FIG. 7 is a scroll bar. This functional control also adjusts to the content being displayed on the first screen. For example, if the picture is displayed onscreen in a fit-to-screen mode, then it cannot be scrolled/panned. However, when the picture is zoomed, this scrolling/panning capability may become active again (in which case the scrolling/panning bar changes appearance dynamically to indicate to the user that the photo can be scrolled/panned). Again, this example shows how the functional controls displayed on the second screen adapt dynamically to the content displayed on the first screen.

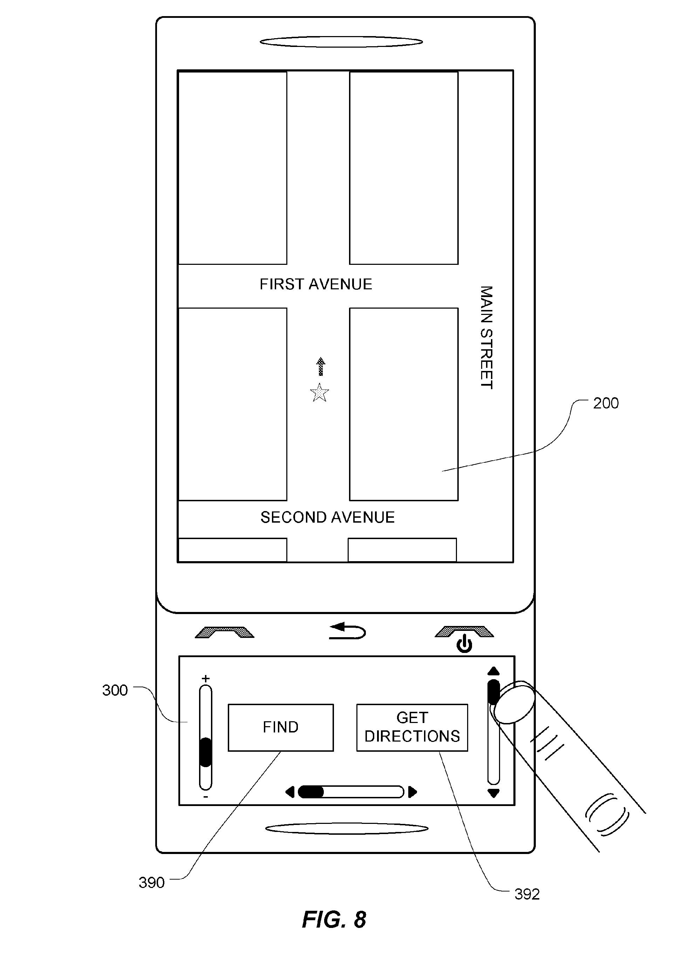

FIG. 8 depicts another example of how the functional controls may be adapted to a specific application. In this further example, navigational controls are generated for interacting with a map/navigation application. As illustrated in this example, "Find" and "Get direction" buttons 390, 392 are displayed in addition to scroll and pan bars and a zoom control slider.

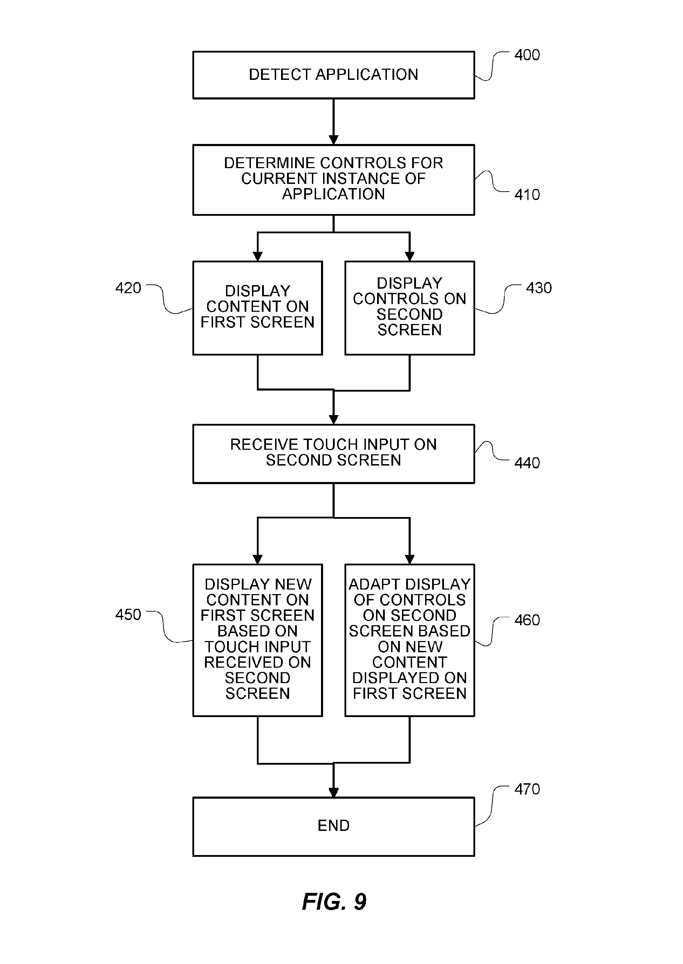

FIG. 9 is a flowchart outlining some of the main steps of a method of interacting with an application on a mobile device. In general terms, the method entails displaying on a first display screen application content generated by the application and displaying on a second display screen functional controls for interacting with the application content. Only the second display screen is a touch-sensitive display screen, i.e. the first display screen may be a non-touch-sensitive display (e.g. a regular LCD screen). In the specific implementation of this method outlined in FIG. 9, the method is initiated by the device detecting which application is presenting content on the first screen (step 400). The next step 410 is to determine the functional controls for the current state or instance of the application. The current state or instance of the application determines what content is being displayed onscreen. At steps 420 and 430, the device displays content on the first screen and the second screen. At step 440, the device receives touch input on the second screen. For the purposes of this flowchart, it is assumed that the touch input causes a change in the state or instance of the application. At step 450, it is assumed that new content is displayed on the first screen in response to the touch input. At step 460, the device dynamically adapts the functional controls on the second screen to reflect the new content presented on the first screen. As will be appreciated, the touch input may not necessarily cause a change in the content being displayed. Furthermore, even if the content being displayed on the first screen changes, the functional controls are not necessarily modified. However, in one implementation, the device dynamically assesses whether to modify or adapt the functional controls displayed on the second screen each time there is a change in onscreen content on the first screen and each time touch input is received.

In one implementation of this novel method, the functional controls may be adapted to a specific state or instance of the application. Certain functional controls may be thus added, modified, deleted, deactivated (greyed out) or reactivated based as the state or instance of the application.

In one implementation of this novel method, the functional controls displayed on the second display screen may be adapted in response to the user input received on the second display screen. In other words, as the device receives user input, the device may alter or modify the functional controls. This may include, for example, changing the colour or appearance of a button, icon, or other user interface element to indicate that the user interface element has just been selected. Alternatively, this may include, for example, removing the user interface element when no further input on a selected user interface elements is warranted. This may include, for example, adding a new tool, menu, icon or other such user interface element in response to a certain input.

In another implementation, the method may entail adapting the functional controls displayed on the second display screen based on changes in the content displayed on the first display screen. The content may change on its own without user input. For example, the content may be a slideshow or video. When the slideshow or video ends, the display of functional controls may change as well to provide or add tools or options that are now relevant to the user (e.g. replay, exit) while removing controls that are no longer relevant (such as pause and volume adjustment).

In another implementation, the functional controls may be adapted based on usage patterns. The device may detect usage patterns over a period of time and then adapt the functional controls displayed to accommodate the user. For example, the user may never use the refresh button. If the device detects that the user never employs the refresh button, then the device may learn that this button of no utility to the user. In that case, the device will intelligently adapt the display of functional controls displayed on the second display screen by removing the refresh button. Accordingly, user interface elements may be added, removed or modified based on usage patterns.

In yet another implementation, the method may include detecting an orientation of the mobile device and then adapting (e.g. rotating and/or modifying and/or adding and/or removing one or more of) the functional controls to accommodate the new orientation of the device when the device is rotated beyond a predetermined angular orientation. This determination of the orientation of the device may be accomplished using an accelerometer or any other suitable sensor. The accelerometer may be, for example, a three-axis micro-electromechanical system (MEMS).

While the foregoing examples have depicted a dual-screen mobile device with the first screen above the second screen, it is to be understood that other arrangements of the screens may be possible.

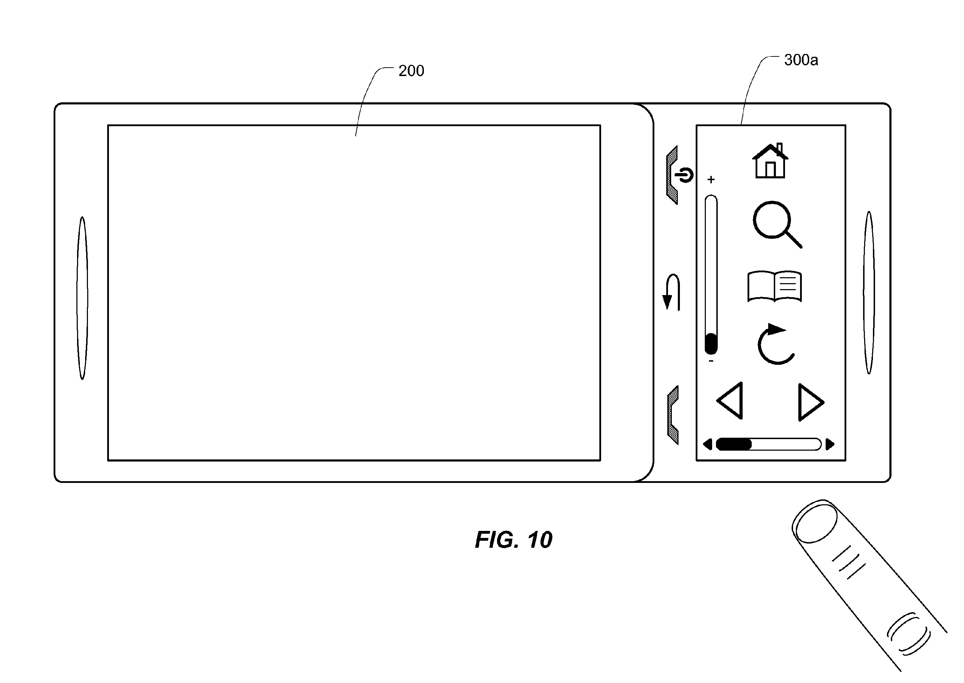

FIG. 10 shows a depiction of yet another example of a dual-screen mobile device in which the device includes an accelerometer (not shown but nonetheless well known in the art) to determine the orientation of the device and to cause the first and second display screens to re-orient the content and functional controls. As shown in this figure by way of example, the second (re-oriented) display screen 300a may advantageously re-arrange the icons, buttons, and user interface elements (as opposed to merely rotating them). This re-orientation of functional controls may also entail resizing the scroll bars to reflect the change from a portrait-type display to a landscape-type display.

While the foregoing description has been directed to a dual-screen mobile device, the technology may be applied to a device has two or more screens where at least one of the screens is touch-sensitive and at least one of the screens is non-touch-sensitive. Thus, the term "dual-screen" in the present specification should be construed as meaning a device having at least two screens. For example, a three-screen device may include a first (main) display screen for displaying content and two touch-sensitive display screens for permitting the user to interact with the device.

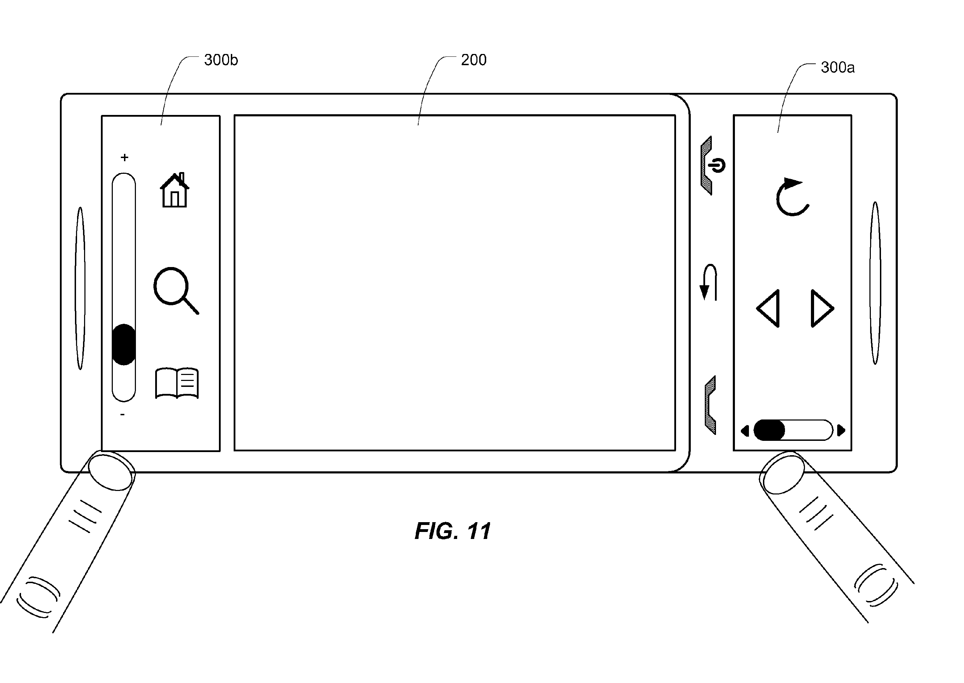

FIG. 11 is a depiction of an example of a multi-screen device having two distinct touch-sensitive display screens and a central (non-touch-sensitive) display screen. As illustrated in the example presented in FIG. 11, the device has three screens, a first (non-touch-sensitive) display screen, a second (touch-sensitive) display screen and a third (touch-sensitive display screen). In this example, the first display screen is larger than the second and third display screens. The second and third display screens may be substantially the same size and shape, as shown by way of example in this figure, or of different size and/or different shape. This triple-screen device enables a user to operate functional controls displayed on each of the second and third (touch-sensitive) display screens. Different functional controls may be displayed on each of the second and third display screens. Alternatively, redundant controls may be displayed on the second and third display screens.

As shown by way of example in FIG. 11, the third display screen (on the left side of the device) includes (e.g. for a browser) the zoom control slider, the bookmarks button, the search button, and the home page button whereas the second display screen (on the right side of the device) includes the pan control, the backward and forward arrows and the refresh button. The user may thus interact with the browser content displayed on the first display screen by touching user interface elements on either the second or third display screens.

In one specific implementation, the addition, deletion and configuration of functional controls on the second and third display screens may be user-configurable or customizable. Customization and configuration of the functional controls (which ones are to be displayed and on which of the two touch-sensitive screens) may be accomplished using a settings menu, preferences menu, options page, etc. For example, the user may wish to remove buttons or icons that he or she never uses. As another example, the user may wish to reorganize the user interface elements so that the ones that are most frequently used are placed in the most ergonomic location on the second and third screens. This could be done by dragging the icons to new onscreen locations to thereby displace other overlapping or nearby icons. As noted above, however, as an alternative, these settings and preferences may be learned by the device by observing the user's usage patterns over a period of time.

The innovation(s) described above may be implemented using any known type of touch-screen technology, including but not limited to so-called clickable "push-screen" touch-sensitive technologies. The latter enable the user to physically depress or click the screen. This screen-clicking capability can be achieved either by mounting the screen on a switch or by using force sensors and an electromechanical system (e.g. a piezo device).

This new technology has been described in terms of specific implementations and configurations which are intended to be exemplary only. Persons of ordinary skill in the art will, having read this disclosure, readily appreciate that many obvious variations, refinements and modifications may be made without departing from the inventive concept(s) disclosed herein. The scope of the exclusive right sought by the Applicant(s) is therefore intended to be limited solely by the appended claims.

## Claims

1. A method of interacting with an application on a mobile device, the method comprising:
displaying on a first display screen application content generated by the application; and
displaying on a second display screen functional controls for interacting with the application content, wherein only the second display screen is a touch-sensitive display screen.

2. The method as claimed in claim 1 wherein the functional controls are adapted to a specific state of the application.

3. The method as claimed in claims 1 or 2 further comprising adapting the functional controls displayed on the second display screen based on user input received on the second display screen.

4. The method as claimed in any one of claims 1 to 3 further comprising adapting the functional controls displayed on the second display screen based on changes in the content displayed on the first display screen.

5. The method as claimed in any one of claims 1 to 4 wherein the functional controls are adapted based on usage patterns.

6. A computer-readable medium comprising instructions in code which when loaded into memory and executed on a processor of a mobile device is adapted to perform the method of any one of claims 1 to 5.

7. A touch-screen mobile device comprising:
a processor coupled to memory for executing an application;
a first display screen for displaying application content generated by the application; and
a second display screen for displaying functional controls for interacting with the application content, wherein only the second display screen is a touch-sensitive display screen.

8. The device as claimed in claim 7 wherein the first display screen is larger than the second display screen.

9. The device as claimed in claims 7 or 8 comprising a plurality of buttons disposed between the first and second display screens on an extension of a touch-sensitive layer extending from the second display screen.

10. The device as claimed in claims 7 or 8 comprising a plurality of buttons disposed between the first and second display screens on an extension of a touch-sensitive layer extending from the second display screen.

11. The device as claimed in any one of claims 7 to 10 wherein the second display screen is movable relative to the first display screen between an exposed position and a protected position.

12. The device as claimed in any one of claims 7 to 11 further comprising a third display screen, wherein the third display screen is also a touch-sensitive display screen.

13. The device as claimed in claim 12 wherein the first display screen is disposed between the second and third display screens.

14. The device as claimed in any one of claims 7 to 13 further comprising an accelerometer for detecting an orientation of the device and for causing the application content displayed on the first display screen and the functional controls displayed on the second display screen to be rotated when the orientation of the device changes beyond a predetermined angular threshold.

15. The device as claimed in any one of claims 7 to 14 wherein the processor is configured to determine a usage pattern corresponding to the application and to cause the second display screen to display functional controls for the application based on the usage pattern.
